# FASCICULE DE BREVET EUROPEEN

(11) **EP 1 133 633 B1**
(45) Date de publication et mention de la délivrance du brevet: **05.03.2003**
(21) Numéro de dépôt: 99954059.4
(22) Date de dépôt: 04.11.1999
(51) Int. Cl.: F02M 37/22

(54) **MOYENS DE FILTRAGE PERFECTIONNES POUR ENSEMBLE DE PUISAGE DE CARBURANT**
VERBESSERTE FILTRIERUNGSEINRICHTUNG FÜR BRENNSTOFFZUFÜHRUNGSEINRICHTUNG
IMPROVED FILTERING MEANS FOR FUEL DRAWING ASSEMBLY

(30) Priorité: 24.11.1998 FR 9814763
(43) Date de publication de la demande: 19.09.2001
(73) Titulaire: MARWAL SYSTEMS, 51000 Chalons en Champagne (FR)
(72) Inventeur: BRUNEL, Daniel, F-51000 Châlons-en-Champagne (FR); DURAND, Alain, F-95120 Ermont (FR)
(74) Mandataire: Texier, Christian
(86) Numéro de dépôt international: FR9902695
(87) Numéro de publication internationale: WO00031407

(56) Documents cités:
- DE-A- 4 140 140
- DE-A- 19 711 531
- DE-A- 19 718 603
- FR-A- 2 272 314

## Description

La présente invention concerne le domaine des dispositifs de puisage de carburant pour véhicule automobile, comportant un filtre.

On a déjà proposé de nombreuses dispositions de filtre pour de tels dispositifs de puisage de carburant.

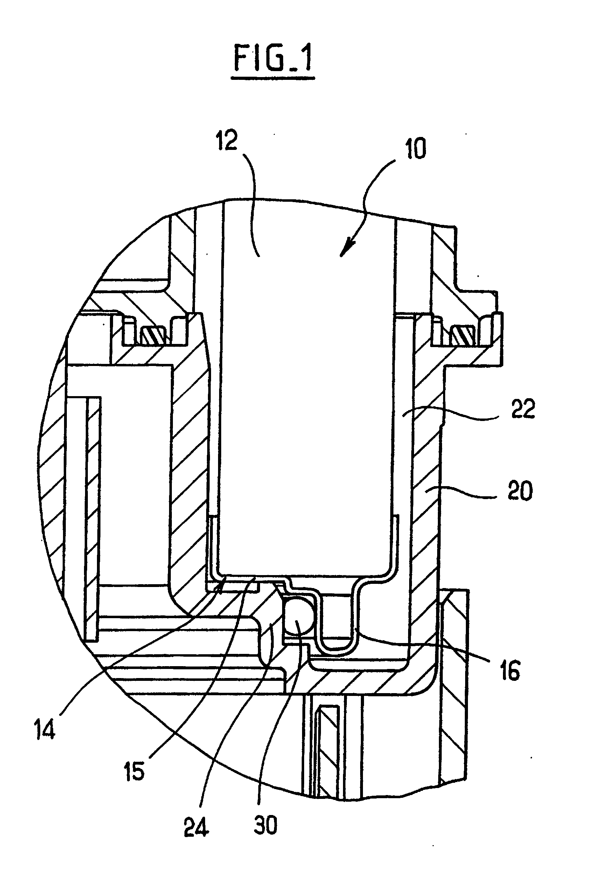

On a illustré sur la figure 1 annexée un exemple de réalisation d'un filtre, proposé par la Demanderesse.

On aperçoit sur cette figure 1, un élément filtrant 10 placé dans un boîtier 20 en matière plastique.

L'élément filtrant 10 possède un corps filtrant 12 de géométrie annulaire, par exemple formé d'un papier plié en accordéon, disposé entre deux flasques annulaires, à ses extrémités axiales, dont le flasque référencé 14 sur la figure 1. Chacun de ces flasques 14 présente une section droite générale en « U » à concavité dirigée vers le corps filtrant 12, et dont l'âme 15 possède, venue d'emboutissage, une excroissance 16.

Cet élément filtrant 10 est disposé dans une chambre annulaire 22 du boîtier 20. Et comme on le voit sur la figure 1 un joint torique 30 en élastomère est intercalé entre un décrochement 24 formé sur la paroi du boîtier 20 et l'excroissance 16. Ce joint 30 est destiné à assurer l'étanchéité entre le flasque 14 et le boîtier 20 pour éviter le contournement du filtre par le carburant, de sorte que le carburant traverse radialement le corps filtrant 12.

La structure illustrée sur la figure 1 peut donner satisfaction.

Cependant son fonctionnement est conditionné par la présence du joint 30.

Tout oubli ou défaut de positionnement rend en effet le filtre 12 inopérant.

La Demanderesse a certes tenté de supprimer le joint 30 en adaptant le positionnement de l'excroissance 16 et du décrochement 24 de sorte que ceux-ci viennent directement en contact. Cependant ces tentatives n'ont pas donné satisfaction. En effet il s'avère très difficile d'assurer une étanchéité satisfaisante au niveau d'une telle surface annulaire entre le décrochement 24 et l'excroissance 16.

D'autres solutions ont été proposées dans la littérature. Cependant aucune ne donne pleinement satisfaction. Et à la connaissance de la Demanderesse aucune de ces solutions proposées n'a donné lieu véritablement à une exploitation industrielle.

A titre d'exemples non limitatifs, le document DE-A-19718603 préconise d'utiliser une structure d'étanchéité élastique en zig-zag, tandis que les documents DE-A-19711531 et DE-A-19646350 préconisent des structures d'étanchéité adaptées pour être engagées/encastrées sur des structures complémentaires en regard pour assurer une étanchéité par effet labyrinthe ou équivalent.

Le but de la présente invention est de proposer de nouveaux moyens permettant de simplifier les structures de filtrage pour ensemble de puisage de carburant pour véhicules automobiles.

Ce but est atteint dans le cadre de la présente invention grâce à un ensemble de puisage de carburant pour véhicule automobile comprenant un boîtier possédant une chambre annulaire, un filtre annulaire d'axe O-O disposé dans ladite chambre annulaire, au moins une lèvre annulaire en matière plastique, venue de matière d'une pièce liée au boîtier ou au filtre annulaire, en un matériau apte à subir une déformation élastique, et conformée selon une orientation oblique par rapport à l'axe O-O, caractérisé par le fait que, lors de l'assemblage du filtre dans le boîtier, ladite lèvre annulaire vienne reposer selon une orientation à composantes tangentielles, avec déformation élastique selon une direction sensiblement axiale, par son extrémité libre contre une face de l'autre du filtre annulaire ou du boîtier en regard de ladite pièce, ladite face étant disposée sensiblement transversalement à l'axe O-O, pour assurer l'étanchéité à ce niveau entre le filtre et le boîtier.

De préférence, dans le cadre de la présente invention, la lèvre annulaire est venue de moulage sur un flasque du filtre.

Plus précisément encore, dans le cadre de la présente invention, le filtre possède une telle lèvre annulaire sur chacun de ses deux flasques d'extrémité.

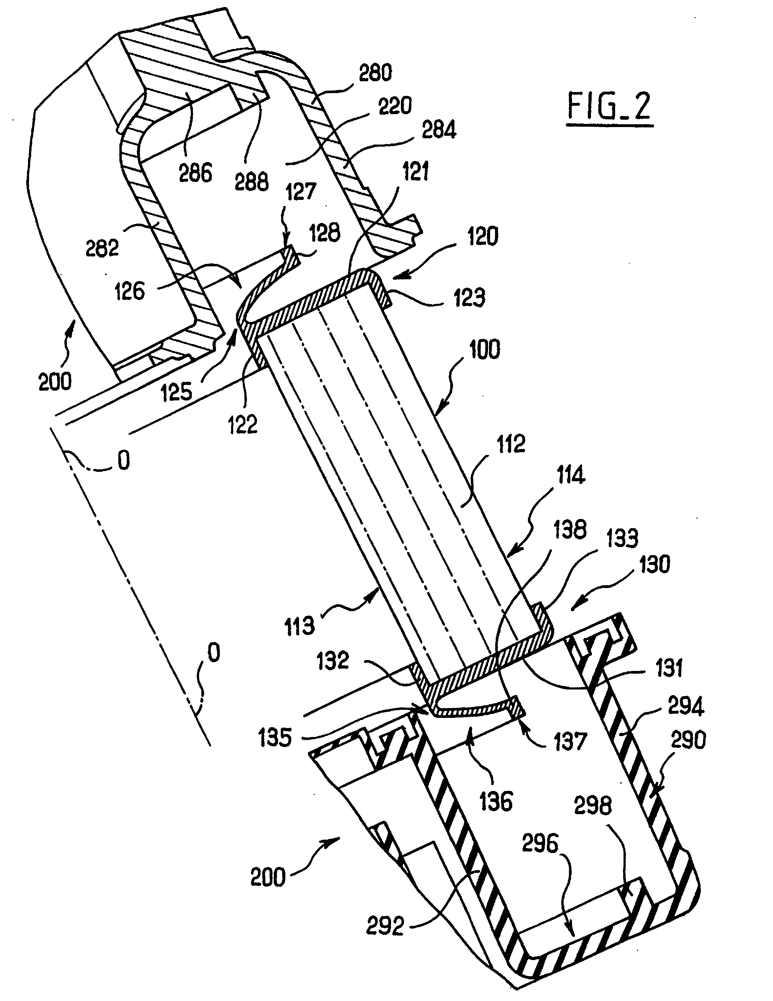

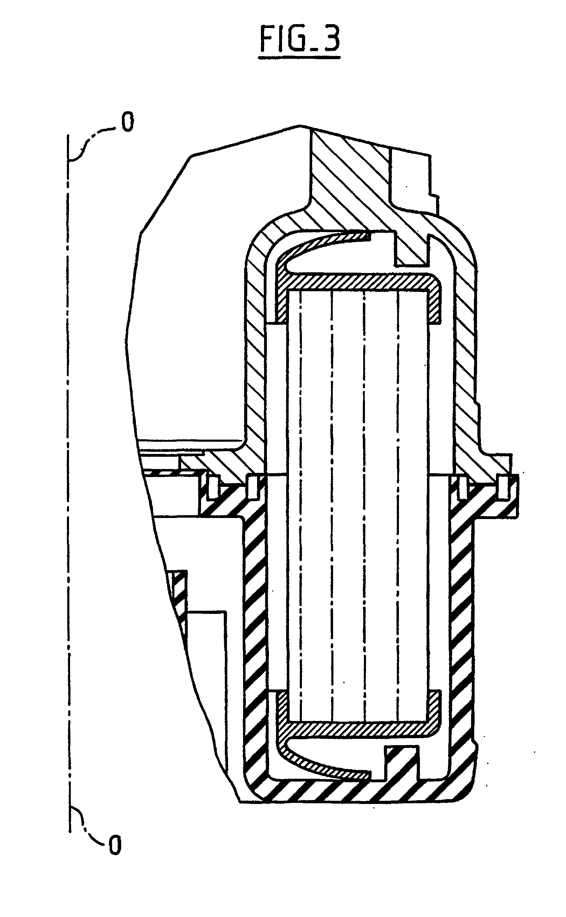

D'autres caractéristiques, buts et avantages de la présente invention apparaîtront à la lecture de la description détaillée qui va suivre et en regard des dessins annexés, donnés à titre d'exemples non limitatifs, et sur lesquels :
. la figure 1 précédemment décrite, représente schématiquement la structure générale d'un filtre pour ensemble de puisage conforme à une disposition proposée antérieurement par la Demanderesse,
. la figure 2 représente schématiquement, en vue éclatée avant assemblage, la structure générale d'un filtre pour un ensemble de puisage conforme à la présente invention et
. la figure 3 représente une vue en coupe axiale, d'une variante de réalisation conforme à la présente invention, en position assemblée.

On retrouve sur les figures 2 et 3 annexées, un élément filtrant 100 disposé dans un boîtier 200.

L'élément filtrant 100 est adapté pour être traversé radialement par du carburant. Cet élément filtrant 100 peut être disposé en amont ou en aval d'une pompe associée, constituée de préférence de façon connue en soit d'une pompe à commande électrique.

L'élément filtrant 100 est constitué d'une structure annulaire centrée sur un axe parallèle à l'axe référencé O-O sur les figures 2 et 3.

Plus précisément encore, l'élément filtrant 100 possède un corps filtrant 112 de géométrie annulaire, par exemple formé d'un papier plié en accordéon, disposé entre deux flasques annulaires 120, 130, à ses extrémités axiales.

Les deux flasques 120, 130 peuvent être identiques. Cependant, dans le cadre de l'invention, on peut concevoir un élément filtrant 100 équipé de flasques 120, 130 différents, respectivement sur ses extrémités.

Chacun des flasques 120, 130 présente une section droite générale en "U" à concavité dirigée vers le corps filtrant 112. Les flasques 120, 130 illustrés sur les figures 2 et 3 possèdent ainsi une âme 121, 131 disposée sur la tranche axiale de l'élément filtrant 112 perpendiculaire à l'axe O-O et prolongée latéralement respectivement par deux ailes 122, 123 ; 132, 133, accolées l'une 122, 132 contre la surface radialement interne 113 du corps filtrant 112, l'autre 123, 133, contre la surface radialement externe 114 de ce corps, parallèle à l'axe O-O.

Les flasques 120, 130 sont avantageusement réalisés à base de matière plastique.

Plus précisément, de préférence, les flasques 120, 130 sont réalisés à base des matériaux choisis dans le groupe comprenant les polyacétals, polyamides et polycétones.

Le boîtier 200 est également réalisé de préférence en matière plastique. Il s'agit de préférence d'un matériau choisi dans le groupe comprenant les polyacétals, polyamides et polycétones.

Le boîtier 200 peut être superposé à une cuvette ou bol de réserve dans laquelle aspire la pompe de carburant. En variante, le boîtier 200 peut être intégré à cette cuvette ou bol de réserve.

Le boîtier 200 définit une chambre annulaire 220 logeant le filtre 100.

Cette chambre annulaire 220 peut être formée par assemblage de deux coquilles 280, 290 qui composent le boîtier 200.

En l'espèce, la chambre annulaire 220 est définie généralement par deux parois principales 282, 284 ; 292, 294 cylindriques concentriques centrées sur un axe parallèle à l'axe O-O.

Ces deux parois principales 282, 284 ; 292 294 sont reliées entre elles par une paroi de base 286, 296 en forme générale de couronne s'étendant dans une direction générale orthogonale à l'axe O-O.

On notera que de préférence, chaque paroi de base 286, 296 est munie d'un muret annulaire 288, 298 qui fait ainsi saillie axialement vers l'intérieur de la chambre 220. Ainsi, chaque muret 288, 298, par son sommet, peut servir d'appui à l'âme 121, 131 d'un flasque 120, 130.

Les murets 288, 298 garantissent ainsi un centrage du filtre 100 dans la chambre 220.

Comme on le voit sur les figures annexées, chaque flasque 120, 130 comporte selon l'invention une lèvre 126, 136 conçue pour assurer l'étanchéité avec la paroi en regard 286, 296 du boîtier.

Chaque lèvre 126, 136 est venue de moulage, en matière plastique, respectivement sur le flasque 120 ou 130.

Les lèvres 126, 136 sont réalisées en un matériau plastique apte à subir une déformation élastique et sont conformées selon une orientation oblique par rapport à l'axe O-O du filtre 100 et de la chambre 220 de boîtier. Ainsi, dans le cadre de l'invention, chaque lèvre 126, 136 vient reposer, avec déformation élastique, et selon une orientation à composantes tangentielles, par son extrémité libre 127, 137, contre une face en regard 286, 296, des coquilles 280, 290 du boîtier, laquelle face est disposée sensiblement transversalement à l'axe O-O du filtre 100 et de la chambre 220 du boîtier.

Selon le mode de réalisation particulier illustré sur les figures annexées, la lèvre 126, 136 est raccordée, en 125, 135, sur le bord radialement interne des flasques 120, 130.

A partir de cette zone 125, 135 de liaison sur le flasque 120, 130, la lèvre 126, 136 est dirigée globalement radialement vers l'extérieur, c'est-à-dire en éloignement de l'axe O-O, en divergeant également par rapport à la face extérieure du flasque 121, 131, en direction de son extrémité libre 127, 137.

Bien entendu, en variante, on peut prévoir la disposition inverse, c'est-à-dire des lèvres 126, 136, raccordées sur le bord radialement externe des flasques 120, 130 et dirigées à partir de cette zone de liaison radialement vers l'intérieur en divergeant par rapport à la face extérieure des flasques 120, 130 en direction de leur extrémité libre.

Selon encore une autre variante de réalisation, les lèvres 126, 136 peuvent être raccordées sur la face extérieure des flasques 120, 130 en un point intermédiaire de l'âme 121, 131, en possédant une orientation oblique par rapport à l'axe O-O, à partir de cette zone de raccordement.

Les lèvres 126, 136 peuvent posséder un profil rectiligne. Cependant, de préférence, elles possèdent un profil au moins légèrement arrondi comme illustré sur les figures annexées.

Plus précisément encore, selon le mode de réalisation préférentiel illustré sur les figures annexées, au niveau de la zone de jonction 125, 135 sur le flasque 120, 130, les lèvres 126, 136 s'étendent dans une direction globalement axiale, c'est-à-dire parallèle à l'axe O-O. Puis les lèvres 126, 136 s'inclinent, pour devenir obliques par rapport à l'axe O-O. Elles possèdent ainsi au niveau de leur tronçon principal, une inclinaison moyenne comprise entre 60 et 80° par rapport à l'axe O-O.

De préférence, les lèvres 126, 136 sont au moins légèrement effilées en direction de leur extrémité libre.

Selon un mode de réalisation particulier illustré sur les figures annexées, dans lequel les lèvres 126, 136 sont raccordées sur le bord radialement interne des flasques 120, 130, les extrémités libres 127, 137 de ces lèvres sont situées sensiblement à l'aplomb du milieu de l'âme 121, 131 des flasques 120, 130.

Ainsi en d'autres termes, les extensions des lèvres 126, 136, de leurs zones de raccordement 125, 135 jusqu'à leurs extrémités libres 127, 137, sont sensiblement égales à la moitié de la largeur des âmes 121, 131 des flasques considérées transversalement à l'axe O-O.

Selon un mode de réalisation particulier, la longueur des lèvres 126, 136 est ainsi de l'ordre de 10mm.

Selon une autre caractéristique avantageuse de l'invention, l'écart défini au repos entre l'extrémité libre 127, 137 des lèvres 126, 136, et la surface extérieure des âmes 121, 131 des flasques 120, 130 est avantageusement de l'ordre de 5mm.

Selon une autre caractéristique avantageuse de l'invention, l'épaisseur moyenne des lèvres 126, 136 est de l'ordre de 1mm.

Comme on le voit sur la figure 2, selon une variante de réalisation de la présente invention, chaque lèvre 126, 136, peut être munie au voisinage de son extrémité libre 127, 137, d'une protubérance 128, 138, en saillie sur la surface extérieure de la lèvre 126, 136. La fonction de cette protubérance 127, 137 est de garantir un contact de la lèvre 126, 136 contre la paroi 286, 296 du boîtier, limitée à l'extrémité libre de la lèvre.

Cette disposition permet de garantir un contact élastique et étanche entre la lèvre 126, 136 et le boîtier 200.

Cependant, on notera qu'une telle protubérance 127, 137 n'est pas indispensable. On a ainsi illustré sur la figure 3 une variante de réalisation selon laquelle les lèvres 126, 136 ne comportent pas de telle protubérance.

Lorsque l'on assemble le filtre 100 équipé des flasques 120, 130 dans les coquilles de boîtier 280, 290, les lèvres 126, 136 viennent en appui, par leur extrémité libre 127, 137, contre les parois 286, 296 du boîtier, puis sont progressivement déformées élastiquement, en rapprochement des âmes 121, 131 des flasques 120, 130, pour garantir l'étanchéité du montage.

Bien entendu, la hauteur de la chambre 220, c'est-à-dire la dimension de cette chambre 220 considérée parallèlement à l'axe O-O doit être supérieure à la hauteur du filtre, c'est-à-dire la distance séparant les surfaces extérieures des âmes 121, 131 des flasques 120, 130, tout en étant inférieures à la distance séparant au repos les extrémités libres 127, 137 des lèvres 126, 136, pour garantir ainsi une déformation élastique des lèvres 126, 136.

En fonctionnement la chambre 220 est remplie de carburant. Ainsi, la lèvre d'étanchéité 126, 136 est elle-même baignée dans du carburant. De ce fait, le volume de la lèvre 126, 136 tend à gonfler de sorte que, après assemblage, en fonctionnement, la lèvre 126, 136 est plaquée automatiquement contre la paroi en regard 286, 296 du boîtier et garantit une étanchéité suffisante entre le flasque 120, 130 respectivement et le boîtier 200, pour interdire ainsi tout contournement du filtre 100. Grâce à cette disposition, on garantit que le carburant transitant par la pompe traverse radialement le corps filtrant 112.

On rappelle que comme indiqué précédemment, un tel filtre 100 peut être disposé en amont ou en aval de la pompe.

La configuration proposée selon la présente invention, offre de nombreux avantages par rapport à l'état de la technique.

En premier lieu, on notera que la présente invention permet de simplifier notablement le montage puisqu'elle permet de supprimer toute nécessité de contrôle de la présence d'un joint. Le simple assemblage du corps filtrant 112 équipé des flasques 120, 130 dans la chambre 220, permet de garantir une étanchéité suffisante entre les deux compartiments situés respectivement de part et d'autre du corps filtrant 112, pour éviter une contamination du carburant situé en aval de celui-ci, dans le sens de circulation du carburant En effet le contact étroit défini entre la lèvre 126, 136 et le boîtier 200 interdit tout contoumement du corps filtrant, sous forme d'un débit parasite entre le corps filtrant 100 et le boîtier 200, notamment du fait que les compartiments amont et aval du système de filtrage, situés respectivement de part et d'autre du filtre 100, sont sensiblement en équipression.

Les lèvres 126, 136 permettent d'assurer la fonction précitée grâce à la combinaison de deux éléments caractéristiques : la sollicitation élastique obtenu par déformation de la lèvre 126, 136 lors de l'assemblage d'une part, et le gonflement des lèvres après trempage dans le carburant, d'autre part.

En outre, la présente invention permet un gain de temps et de coût.

Elle permet par ailleurs d'utiliser des boîtiers classiques 200, c'est-à-dire des structures de boîtier n'exigeant aucune structure complexe particulière.

Dans le cadre de la présente invention, le boîtier 200 et les flasques 120,130 peuvent être réalisés dans une matière plastique identique, ou dans des matières plastiques différentes, éventuellement l'un étant chargé l'autre non. L'essentiel est que la pièce qui porte les lèvres 120, 130 soit réalisée en un matériau apte à subir une déformation élastique, ainsi que de préférence à gonfler de façon significative lorsque la lèvre baigne dans le carburant.

Selon une variante de réalisation de l'invention, l'un seulement des flasques 120,130 est muni d'une lèvre élastique comme décrit précédemment.

Selon une autre variante, l'une au moins des lèvres élastiques d'étanchéité est prévue sur le boîtier, venue de moulage sur une paroi 286 ou 296 et adaptée pour venir reposer contre la surface extérieure des âmes 121, 131 des flasques 120, 130.

## Revendications

1. Ensemble de puisage de carburant pour véhicule automobile comprenant un boîtier (200) possédant une chambre annulaire (220), un filtre annulaire (100) d'axe O-O disposé dans ladite chambre annulaire, au moins une lèvre annulaire (126, 136) en matière plastique, venue de matière d'une pièce (120, 130, 286, 296) liée au boîtier (200) ou au filtre annulaire (100), en un matériau apte à subir une déformation élastique, et conformée selon une orientation oblique par rapport à l'axe O-O, **caractérisé par le fait que**, lors de l'assemblage du filtre dans le boîtier, ladite lèvre annulaire (126, 136) vienne reposer selon une orientation à composantes tangentielles, avec déformation élastique selon une direction sensiblement axiale, par son extrémité libre (127, 137), contre la face (286, 296, 121, 131), de l'autre du filtre annulaire (100) ou du boîtier (200) en regard de ladite pièce (120, 130, 286, 296), ladite face étant disposée sensiblement transversalement à l'axe O-O, pour assurer l'étanchéité à ce niveau entre le filtre (100) et le boîtier (200).

2. Ensemble selon la revendication 1, **caractérisé par le fait que** la lèvre annulaire (126, 136) est venue de moulage sur un flasque (120,130) du filtre (100).

3. Ensemble selon l'une des revendications 1 ou 2, **caractérisé par le fait que** le filtre (100) possède une lèvre annulaire (126, 136) sur chacun de ces deux flasques d'extrémité (120, 130).

4. Ensemble selon l'une des revendications 1 à 3, **caractérisé par le fait que** la lèvre (126, 136) est réalisée en un matériau choisi dans le groupe comprenant les polyacétales, les polyamides et les polycétones.

5. Ensemble selon l'une des revendications 1 à 4, **caractérisé par le fait que** chaque paroi de base (286,296) du boîtier (200), transversale à l'axe (O-O) du filtre est destinée à servir d'appui à une lèvre (126, 136), et munie d'un muret (288, 298) annulaire en saillie.

6. Ensemble selon l'une des revendications 1 à 5, **caractérisé par le fait que** la lèvre (126, 136) est raccordée sur le bord radialement interne d'un flasque (120, 130) du filtre.

7. Ensemble selon l'une des revendications 1 à 5, **caractérisé par le fait que** la lèvre (126, 136) est raccordée sur le bord radialement externe du flasque (120, 130) du filtre (100).

8. Ensemble selon l'une des revendications 1 à 5, **caractérisé par le fait que** la lèvre (126, 136) est raccordée sur une zone intermédiaire d'un flasque (120, 130) du filtre (100).

9. Ensemble selon l'une des revendications 1 à 8, **caractérisé par le fait que** chaque lèvre (126, 136) a un profil globalement arrondi.

10. Ensemble selon l'une des revendications 1 à 9, **caractérisé par le fait que** chaque lèvre (126, 136) possède un corps incliné d'un angle de l'ordre de 60 à 80° par rapport à l'axe (O-O) du filtre.

11. Ensemble selon l'une des revendications 1 à 10, **caractérisé par le fait que** la lèvre (126, 136) est effilée en direction de son extrémité libre (127, 137).

12. Ensemble selon l'une des revendications 1 à 11, **caractérisé par le fait que** l'extrémité libre (127, 137) de la lèvre (126, 136) est située sensiblement à l'aplomb du milieu du flasque (120, 130) qui la porte.

13. Ensemble selon l'une des revendications 1 à 12, **caractérisé par le fait que** la longueur de la lèvre (126, 136) est de l'ordre de 10mm.

14. Ensemble selon l'une des revendications 1 à 13, **caractérisé par le fait qu'**avant assemblage du filtre dans le boîtier, la distance séparant l'extrémité libre (127, 137) d'une lèvre (126, 136) et la surface extérieure d'une âme (121, 131) du flasque (120, 130) qui la porte, est de l'ordre de 5mm.

15. Ensemble selon l'une des revendications 1 à 14, **caractérisé par le fait que** l'épaisseur moyenne de la lèvre (126, 136) est de l'ordre de 1mm.

16. Ensemble selon l'une des revendications 1 à 15, **caractérisé par le fait que** la lèvre (126, 136) est munie d'une protubérance (128, 138), sur son extrémité libre (127, 137), en saillie sur sa surface extérieure.

17. Ensemble selon l'une des revendications 1 à 16, **caractérisé par le fait que** la hauteur axiale de la chambre annulaire (220), considérée parallèlement à l'axe (O-O) du filtre est supérieure à la hauteur du corps de filtre (100) et inférieure à la distance séparant au repos l'extrémité libre (127, 137) de deux lèvres (126, 136) situées respectivement sur les flasques (120, 130) d'extrémité du corps de filtre (100).

## Claims

1. Motor vehicle fuel drawing assembly comprising a housing (200) possessing an annular chamber (220), an annular filter (100) of axis O-O in the the said annular chamber, at least one annular plastic lip (126, 136), moulded integrally with a part (120, 130, 286, 296) connected to the housing (200) or to the annular filter (100), in a material capable of elastic deformation, and shaped to form an oblique angle to the axis O-O, **characterized in that**, when assembling the filter into the housing, the said annular lip (126, 136) rests at an angle with tangential components, with elastic deformation in an approximately axial direction, via its free edge (127, 137), against the face (286, 296, 121, 131) of the other of the annular filter (100) or of the housing (200) opposite the said part (120, 130, 286, 296), the said face being arranged approximately transversely relative to the axis O-O, in order to prevent leaks at this location between the filter (100) and the housing (200).

2. Assembly according to Claim 1, **characterized in that** the annular lip (126, 136) is moulded integrally on a cap (120, 130) that fits on the filter (100).

3. Assembly according to either of Claims 1 and 2, **characterized in that** the filter (100) possesses an annular lip (126, 136) on each of these two end caps (120, 130).

4. Assembly according to one of Claims 1 to 3, **characterized in that** the lip (126, 136) is made of a material selected from the group comprising the polyacetals, the polyamides and the polyketones.

5. Assembly according to one of Claims 1 to 4, **characterized in that** each base wall (286, 296) of the housing (200) at right angles to the axis (O-O) of the filter is designed to act as a bearing surface for a lip (126, 136), and is provided with a projecting annular ridge (288, 298).

6. Assembly according to one of Claims 1 to 5, **characterized in that** the lip (126, 136) is attached to the radially inner edge of a cap (120, 130) of the filter.

7. Assembly according to one of Claims 1 to 5, **characterized in that** the lip (126, 136) is attached to the radially outer edge of the cap (120, 130) of the filter (100).

8. Assembly according to one of Claims 1 to 5, **characterized in that** the lip (126, 136) is attached to an intermediate part of a cap (120, 130) of the filter (100).

9. Assembly according to one of Claims 1 to 8, **characterized in that** each lip (126, 136) has a generally rounded profile.

10. Assembly according to one of Claims 1 to 9, **characterized in that** each lip (126, 136) possesses a body inclined by an angle of around 60 to 80° relative to the axis (O-O) of the filter.

11. Assembly according to one of Claims 1 to 10, **characterized in that** the lip (126, 136) tapers toward its free edge (127, 137).

12. Assembly according to one of Claims 1 to 11, **characterized in that** the free edge (127, 137) of the lip (126, 136) is situated approximately over the middle of a cap (120, 130) on which it is carried.

13. Assembly according to one of Claims 1 to 12, **characterized in that** the length of the lip (126, 136) is of the order of 10 mm.

14. Assembly according to one of Claims 1 to 13, **characterized in that** before assembly of the filter into the housing, the distance between the free edge (127, 137) of a lip (126, 136) and the outer surface of a web (121, 131) of the cap (120, 130) on which it is carried, is of the order of 5 mm.

15. Assembly according to one of Claims 1 to 14, **characterized in that** the average thickness of the lip (126, 136) is of the order of 1 mm.

16. Assembly according to one of Claims 1 to 15, **characterized in that** the lip (126, 136) is provided, on its free edge (127, 137), with a protuberance (128, 138) projecting from its outer surface.

17. Assembly according to one of Claims 1 to 16, **characterized in that** the axial height of the annular chamber (220), taken parallel to the axis (O-O) of the filter, is greater than the height of the filter body (100) and less than the distance at rest between the free edge (127, 137) of two lips (126, 136) situated one on each of the end caps (120, 130) of the filter body (100).

## Patentansprüche

1. Baugruppe zur Zuführung von Treibstoff für ein Kraftfahrzeug, mit einem Gehäuse (200), das eine kreisringförmige Kammer (220) besitzt, einem kreisringförmigen Filter (100) mit der Achse 0-0, das in der genannten, kreisringförmigen Kammer angeordnet ist, und mindestens einer kreisringförmigen Lippe (126, 136) aus Kunststoff, die dem Material eines Werkstücks (120, 130, 286, 296) entstammt, das mit dem Gehäuse (200) oder dem kreisringförmigen Filter (100) verbunden ist, aus einem Werkstoff, der geeignet ist, eine elastische Verformung zu erfahren, und in bezug auf die Achse 0-0 in einer schrägen Ausrichtung ausgerichtet ist, **dadurch gekennzeichnet, daß** während des Einbaus des Filters in das Gehäuse die genannte, kreisringförmige Lippe (126, 136) in einer Ausrichtung mit tangentialen Komponenten, mit elastischer Verformung in einer im wesentlichen axialen Richtung, mit ihrem freien Ende (127, 137) gegen die Fläche (286, 296, 121, 131) des anderen von kreisringförmigem Filter (100) oder Gehäuse (200), dem genannten Werkstück (120, 130, 286, 296) gegenüberliegend, zur Auflage gelangt, wobei die genannte Fläche im wesentlichen quer zur Achse 0-0 angeordnet ist, um die Abdichtung auf diesem Niveau zwischen dem Filter (100) und dem Gehäuse (200) sicherzustellen.

2. Baugruppe nach Anspruch 1, **dadurch gekennzeichnet, daß** die kreisringförmimge Lippe (126, 136) dem Abformen auf einem Flansch (120, 130) des Filters (100) entstammt.

3. Baugruppe nach einem der Ansprüche 1 oder 2, **dadurch gekennzeichnet, daß** das Filter (100) eine kreisringförmige Lippe (126, 136) auf jedem seiner beiden Endflansche (120, 130) besitzt.

4. Baugruppe nach einem der Ansprüche 1 bis 3, **dadurch gekennzeichnet, daß** die Lippe (126, 136) aus einem Material hergestellt ist, das in der Gruppe ausgewählt ist, die die Polyazetate, die Polyamide und die Polyketone aufweist.

5. Baugruppe nach einem der Ansprüche 1 bis 4, **dadurch gekennzeichnet, daß** jede Basiswand (286, 296) des Gehäuses (200), die quer zur Achse (0-0) des Filters verläuft, dazu bestimmt ist, als Auflage für eine Lippe (126, 136) zu dienen, und mit einem kreisringförmigen, vorspringenden Wall (288, 298) versehen ist.

6. Baugruppe nach einem der Ansprüche 1 bis 5, **dadurch gekennzeichnet, daß** die Lippe (126, 136) über dem radial inneren Rand mit einem Flansch (120, 130) des Filters versehen ist.

7. Baugruppe nach einem der Ansprüche 1 bis 5, **dadurch gekennzeichnet, daß** die Lippe (126, 136) über dem radial äußeren Rand mit einem Flansch (120, 130) des Filters (100) versehen ist.

8. Baugruppe nach einem der Ansprüche 1 bis 5, **dadurch gekennzeichnet, daß** die Lippe (126, 136) über einer Zwischenzone mit einem Flansch (120, 130) des Filters (100) versehen ist.

9. Baugruppe nach einem der Ansprüche 1 bis 8, **dadurch gekennzeichnet, daß** jede Lippe (126, 136) ein insgesamt abgerundetes Profil hat.

10. Baugruppe nach einem der Ansprüche 1 bis 9, **dadurch gekennzeichnet, daß** jede Lippe (126, 136) einen Körper besitzt, der unter einem Winkel in der Größenordnung von 60 bis 80° in Bezug auf die Achse (0-0) des Filters geneigt ist.

11. Baugruppe nach einem der Ansprüche 1 bis 10, **dadurch gekennzeichnet, daß** die Lippe (126, 136) in Richtung ihres freien Endes (127, 137) verjüngt ist.

12. Baugruppe nach einem der Ansprüche 1 bis 11, **dadurch gekennzeichnet, daß** das freie Ende (127, 137) der Lippe (126, 136) im wesentlichen senkrecht zur Mitte des Flansches (120, 130) gelegen ist, der sie trägt.

13. Baugruppe nach einem der Ansprüche 1 bis 12, **dadurch gekennzeichnet, daß** die Länge der Lippe (126, 136) in der Grössenordnung von 10 mm liegt.

14. Baugruppe nach einem der Ansprüche 1 bis 13, **dadurch gekennzeichnet, daß** vor dem Einbau des Filters in das Gehäuse der Abstand, der das freie Ende (127, 137) einer Lippe (126, 136) und die Außenoberfläche eines Steges (121, 131) des Flansches (120, 130) trennt, der sie trägt, in der Größenordnung von 5 mm liegt.

15. Baugruppe nach einem der Ansprüche 1 bis 14, **dadurch gekennzeichnet, daß** die mittlere Dicke der Lippe (126, 136) in der Größenordnung von 1 mm liegt.

16. Baugruppe nach einem der Ansprüche 1 bis 15, **dadurch gekennzeichnet, daß** die Lippe (126, 136) mit einer Ausstülpung (128, 138) auf ihrem freien Ende (127, 137) versehen ist, die auf der Außenoberfläche vorspringt.

17. Baugruppe nach einem der Ansprüche 1 bis 16, **dadurch gekennzeichnet, daß** die axiale Höhe der ringförmigen Kammer (220), parallel zur Achse (0-0) des Filters gesehen, größer ist als die Höhe des Körpers des Filters (100) und kleiner als der Abstand, der im Ruhezustand das freie Ende (127, 137) der beiden Lippen (126, 136) trennt, die jeweils auf den Flanschen (120, 130) des Endes des Körpers des Filters (100) gelegen sind.
